Europäisches Patentamt

European Patent Office

Office européen des brevets

(19)

(11) EP 1 530 076 A1

(12) EUROPEAN PATENT APPLICATION

(43) Date of publication:
11.05.2005  Bulletin 2005/19

(51) Int Cl.⁷: $G02F\ 1/139$, H04N 9/31

(21) Application number: 04256784.2

(22) Date of filing: 03.11.2004

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(30) Priority: 06.11.2003  KR 2003078322

(71) Applicant: Samsung Electronics Co., Ltd.
Suwon-city, Gyeonggi-do (KR)

(72) Inventors:
• **Wang, Jong-min,
303-502 Cheongsol Maeul Halla Apt.
Seongnam-si Gyeonggi-do (KR)**
• **Oh, Jin-kyoung,
105-1102 Bangbae 1-cha Hyundai Apt
Seoul (KR)**
• **Park, Sang-moo
Uijeongbu-si Gyeonggi-do (KR)**

• **Cho, Tae-hee
Seoul (KR)**
• **Kim, Yu-jin,
104-1105 Mangpo Maeul E-Village Apt.
Suwon-si Gyeonggi-do (KR)**
• **Furnichi, Keiji, Samsung Adv. Inst. of Tech.
Yongin-si Gyeonggi-do (KR)**
• **Hyun, Soon-young
Seoul (KR)**
• **Kim, Joo-young,
104-1005 Byucksan E-Village Apt.
Suwon-si Gyeonggi-do (KR)**
• **Kim, Chang-ju, 109-801 Seoksu LG Village Apt.
Anyang-si Gyeonggi-do (KR)**

(74) Representative: **Greene, Simon Kenneth
Elkington and Fife LLP,
Prospect House,
8 Pembroke Road
Sevenoaks, Kent TN13 1XR (GB)**

(54) **Reflecting type liquid crystal display device and projector using the same**

(57)   A reflecting type liquid crystal display device having a perpendicularly aligned structure and shorter response time and a projector using the same are provided. The reflecting type liquid crystal display device includes a first substrate having a reflective electrode, a second substrate having a transparent electrode, first and second alignment layers provided on the first substrate and the second substrate to be opposed to and face each other, a spacer interposed between the first alignment layer and the second alignment layer to form a predetermined cell gap therebetween, and vertically aligned liquid crystals injected into the cell gap, the cell gap being not greater than 1.0 μm, the dielectric anisotropy of the liquid crystals being negative value, and the refractive index anisotropy of the liquid crystals being not less than 0.14. The projector includes a light source; a color separation unit, a reflecting type liquid crystal display device for selectively reflecting light beams of the respective colors separated by the color separation unit and sequentially incident thereto to form an image, an optical path changing unit disposed on an optical path between the light source and the reflecting type liquid crystal display device, for changing the optical path of the light incident from the light source to be directed toward a screen via the reflecting type liquid crystal display device, and a projection lens unit.

FIG. 3

EP 1 530 076 A1

**Description**

The present invention relates to a reflecting type liquid crystal display device and a projector using the same, and more particularly, to a reflecting type liquid crystal display device having a perpendicularly aligned structure and shorter response time speed, and a projector using the same.

In general, microdisplays for use in a projection television or a head mounted device (HMD) are categorized into a high temperature poly-Si (HTPS) type, a digital light processing (DLP) type, a liquid crystal on silicon (LCoS) type according to image formation method.

The LCoS type microdisplay displays an image using a reflecting type liquid crystal display, achieving high resolution and low cost implementation. Thus, the LCoS type microdisplay has gained attraction as the most competitive next-generation microdisplay.

A projection television of the LCoS type is further divided into a three-panel type and a one-panel type according to the number of liquid crystal panels used.

The three-panel type projector implements color images using three reflecting type liquid crystal display devices which independently form red (R), green (G), blue (B) images, respectively. The three-panel type projector is advantageous in that it can be implemented by reflecting type liquid crystal display devices having a slow response time of approximately 15 ms. The term "response time" used herein means a time taken until a liquid crystal whose state of alignment has changed according to a control signal restores its original alignment state. Use of the three-panel type projector, however, presents several drawbacks, including complexity in configuration and an increase in cost, compared to the one-panel type.

The one-panel type projector implements color images using a single reflecting type liquid crystal display device, enabling simplifying an optical configuration and arrangement and reducing the cost. According to this type, red (R), green (G), blue (B) image displays are sequentially driven over time, requiring a shorter response time than the three-panel type. That is to say, in order to avoid color break-up, a response time required for realization of 3 colors using the one-panel type should be less than about 1 ms. Another requirement associated with the use of the one-panel type is a high contrast ratio (C/R).

One of liquid crystal display devices capable of a quick response time of less than 1 ms is a ferroelectric liquid crystal display (FLCD). The FLCD, however, has several limitations in that a contrast ratio (C/R) is difficult to achieve and it is vulnerable to deterioration in performance.

In order to ensure a high C/R, a reflecting type liquid crystal display device having a vertically aligned structure has been conventionally proposed, as disclosed in Japanese Patent Laid-Open Publication No. 2003-107482 dated April 9, 2003, entitled "Reflecting Type Liquid Crystal Display Device, Display Apparatus, Projecting Optical System, and Projecting Display System".

The disclosed liquid crystal display device has features that a vertically aligned liquid crystal layer has a thickness of not greater than 2 μm, and refractive index anisotropy (Δn) of a vertically aligned liquid crystal material is greater than 0.1, so that a transmissivity requirement of a liquid crystal is easily met with a saturation voltage of 5 to 6 V enabling a low voltage display.

The highest response time obtainable by the reflecting type liquid crystal display device having such a vertically aligned structure, while maintaining a saturation voltage ($V_{sat}$) of not greater than 6 V, is approximately 1.9 ms.

Thus, the conventional reflecting type liquid crystal display device is not suitably employed to a one-panel type projector.

The present invention provides a reflecting type liquid crystal display device having an improved vertically aligned structure, which has a quick response time of less than 1 ms as well as a high contrast ratio, and a one-panel type projector using the same.

According to an aspect of the present invention, there is provided a reflecting type liquid crystal display device comprising: a first substrate having a reflective electrode; a second substrate having a transparent electrode; first and second alignment layers provided on the first substrate and the second substrate to be opposed to and face each other; a spacer interposed between the first alignment layer and the second alignment layer to form a predetermined cell gap (d) therebetween; and vertically aligned liquid crystals injected into the cell gap, the cell gap (d) being not greater than 1.0 μm, the dielectric an isotropy (Δε) of the liquid crystals being negative value, and the refractive index anisotropy (Δn) of the liquid crystals being not less than 0.14.

According to another aspect of the present invention, there is provided a projector comprising: a light source for producing light and illuminating the produced light to be directed in one direction; a color separation unit for separating colors from the light illuminated from the light source and causing light beams corresponding to the separated colors to sequentially travel; a reflecting type liquid crystal display device for selectively reflecting light beams of the respective colors separated by the color separation unit and sequentially incident thereto to form an image, the reflecting type liquid crystal display device comprising a first substrate having a reflective electrode, a second substrate having a transparent electrode, first and second alignment layers provided on the first substrate and the second substrate to be opposed to and face each other, a spacer interposed between the first alignment layer and the second alignment layer to form a predetermined cell gap (d) therebetween, and vertically aligned liquid crystals injected into the cell gap, the cell gap (d) being not greater than 1.0 μm, the dielectric anisotropy (Δε) of the liquid crystals being a negative value, and the refractive index anisotropy (Δn) of the liquid crystals being not less than 0.14; an optical path changing unit disposed on an optical path between the light source and the reflecting type liquid crystal display device, for changing the optical path of the light incident from the light source to be directed toward a screen via the reflecting type liquid crystal display device; and a projection lens unit for projecting the image formed by the reflecting type liquid crystal display device toward the screen.

The above aspect and advantages of the present invention will become more apparent by describing in detail exemplary embodiments thereof with reference to the attached drawings in which:

FIG. 1 is a schematic cross-sectional view of an exemplary reflecting type liquid crystal display device according to the present invention;

FIGS. 2A and 2B schematically illustrate an exemplary operation of the reflecting type liquid crystal display device according to the present invention; and

FIG. 3 schematically illustrates an exemplary optical arrangement of a projector according to the present invention.

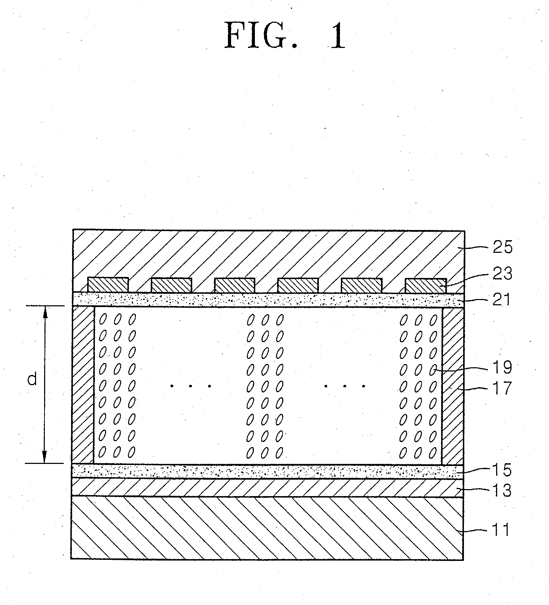

Referring to FIG. 1, an exemplary reflecting type liquid crystal display device according to the present invention includes first and second substrates 11 and 25, first and second alignment layers 15 and 21, a spacer 17 and a liquid crystal 19.

The first substrate 11, which is formed of a reflective material, includes striped reflective electrodes 13. The reflective electrodes 13 are formed of a highly reflective material, e.g., aluminum.

The second substrate 25, which is formed of a transparent material, includes striped transparent electrodes 23. The transparent electrodes 23 are formed of indium tin oxide (ITO).

The reflective electrodes 13 and the transparent electrodes 23 are arranged so as to cross each other at portions corresponding pixels, and are used to control the liquid crystal 19 in units of the respective pixels.

The first and second alignment layers 15 and 21 are provided to be opposite to and face the first substrate 11 and the second substrate 25, respectively. In other words, the first alignment layer 15 is provided on the top surface of the first substrate 11 while the second alignment layer 21 is provided on the bottom surface of the second substrate 25. The first and second alignment layers 15 and 21, which determine an alignment orientation of the liquid crystal 19 so that the liquid crystal 19 is aligned in a vertical direction, have a pretilt angle a satisfying the following relationship (1):

$$80° \le \alpha \le 90° \qquad (1)$$

where the pretilt angle α is formed by a rubbing process.

The pretilt angle α allows the liquid crystal 19 disposed between the first and second alignment layers 15 and 21 to be vertically arranged. The first and second alignment layers 15 and 21 are preferably formed of a light alignment layer, e.g., polyimide, or a silicon oxide (SiO₂) layer.

The spacer 17 is interposed between the first alignment layer 15 and the second alignment layer 21, and maintains the first alignment layer 15 and the second alignment layer 21 to be spaced apart a predetermined cell gap (d) from each other. Thus, an internal space is formed between the first alignment layer 15 and the second alignment layer 21 by the spacer 17, and the liquid crystal 19 is injected into the internal space.

Preferably, the spacer 17 is shaped of a pillar or ball and made of silicon oxide (SiO₂).

The thus-constructed reflecting type liquid crystal display device has different orientations of the liquid crystal according to presence or absence of driving power applied.

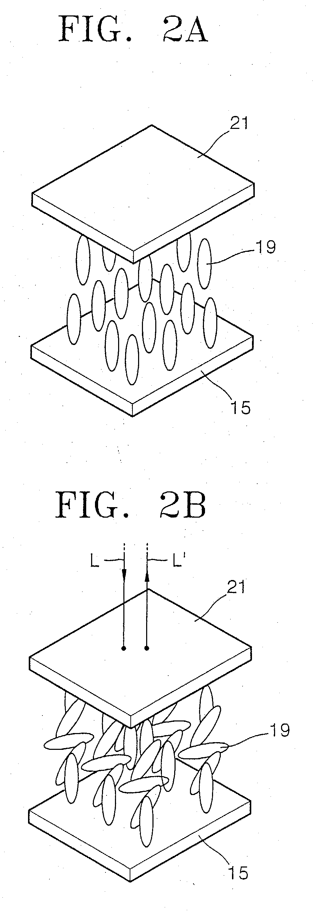

FIG. 2A shows the orientation of liquid crystals when there is no driving power applied. Referring to FIG. 2A, the liquid crystal 19 is vertically aligned, and allows emitted light to be reflected again without phase retardation with respect to incident light. Thus, in such a state as shown in FIG. 2A, when the reflecting type liquid crystal display device is employed to a projector to be described later, a black image can be realized.

FIG. 2B shows the orientation of liquid crystals when driving power is applied to the reflecting type liquid crystal display device according to the present invention. Referring to FIG. 2B, the liquid crystal 19 has a twisted orientation. In this case, incident light L is phase-retarded by a quarter (1/4) a wavelength of the incident while it is directed toward the first substrate 11. Here, the wavelength refers to a central wavelength of visible light, i.e., 550 nm. Thus, exit light L' emitted through the second substrate 25 is phase retarded by a half (1/2) the wavelength of the incident light L. In other words, when the incident light L is S-polarized light, the exit light L' becomes P-polarized light due to phase retardation. When the illustrated liquid crystal display device is employed to a projector, which will be described below, a white image display can be realized.

The aforementioned reflecting type liquid crystal display device satisfies the following relationships (2) in view of cell gap (d) and dielectric anisotropy (Δε) and refractive index anisotropy (Δn) of the liquid crystal 19:

$$d \le 1.0 \ [\mu m];$$

$$\Delta\varepsilon < 0;$$

and

$$\Delta n \geq 0.14 \qquad (2)$$

The above relationships (2) represent conditions required to realize high brightness at a low saturation voltage ($V_{sat}$) while maintaining a response time $\tau$ of the liquid crystal to be not greater than 1 msec.

The response time $\tau$ is substantially inversely proportional to the square of the cell gap (d), that is, $\tau \sim 1/d^2$. Thus, the smaller the cell gap (d), the faster the response time. If the cell gap (d) is reduced, the saturation voltage ($V_{sat}$) increases and the brightness is lowered, so that there is a limit in reducing the cell gap (d).

In the present invention, such problems associated with the cell gap (d) being not greater than 1 [μm], that is, an increase in saturation voltage ($V_{sat}$) and deterioration in brightness, can be solved by maintaining the refractive index anisotropy (An) of the liquid crystal 19 at a high level.

In view of the foregoing, the refractive index anisotropy An and cell gap (d) are set to satisfy the following relationship (3):

$$d \times \Delta n = \lambda/4 \qquad (3)$$

where $\lambda$ is a wavelength of light incident to the liquid crystal display device.

Thus, in the illustrative embodiment, approximately 550 [nm], that is, the central wavelength of visible light, is used as the wavelength $\lambda$ and 1 [μm] is used as the cell gap (d), thereby obtaining the refractive index anisotropy ($\Delta n$) of approximately 0.138. On the basis of the result, a liquid crystal having a refractive index anisotropy ($\Delta n$) of 0.14 is used for the liquid crystal display device.

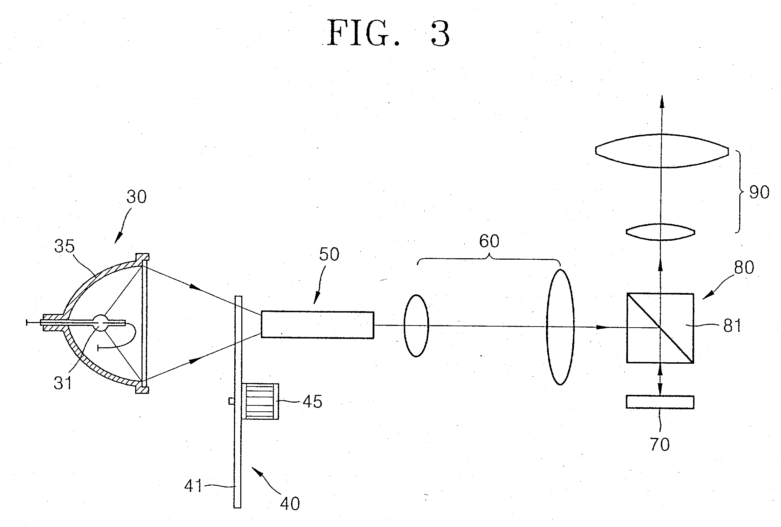

Values of the refractive index anisotropy ($\Delta n$) and the cell gap (d) are so set as shown in the above relationships (2), so that the saturation voltage ($V_{sat}$) can be adjusted to a level not greater than 6 [V] while maintaining the response time $\tau$ at approximately 1 [msec], thereby implementing a one-panel type projection television. Referring to FIG. 3, an exemplary projector according to the present invention includes a light source 30, a color separation unit 40 for separating a color from white light illuminated from the light source 30, a reflecting type liquid crystal display device 70 for forming an image from incident light, an optical path changing unit 80 for changing an optical path of the image to be directed toward a screen (not shown), and a projection lens unit 90 for enlarging the light whose traveling path is converted by the optical path changing unit 80 and projecting the same toward the screen.

Also, the projector according to the present invention may further include a uniform light illuminating unit 50 provided on an optical path between the color separation unit 40 and the optical path changing unit 80 to make light traveling toward the reflecting type liquid crystal display device 70 become uniform light, and a relay lens unit 60 for making the light having passed through the uniform light illuminating unit 50 be convergent and/or divergent and relaying the light to the liquid crystal display device 70.

The light source 30 includes a lamp 31 for generating light, and a reflecting mirror 35 for illuminating the generated light to travel in one direction. The reflecting mirror 35 can be classified into an elliptical mirror and a parabolic mirror according to the curvature shape. The configuration of the light source 30 is well known in the art and an explanation thereof will not be given.

The color separation unit 40 is disposed on an optical path between the light source 30 and the liquid crystal display device 70. The color separation unit 40 includes a color rotating plate 41, and a driver 45 for rotating the color rotating plate 41. The color rotating plate 41 serves to temporally or spatially filter a beam having a predetermined wavelength among beams of white light incident from the light source 30. Thus, an image having different colors over time is incident to the liquid crystal display device 70 by rotating the color rotating plate 41 by means of the driver 45.

The uniform light illuminating unit 50 is formed of a glass rod as shown in FIG. 3. The uniform light illuminating unit 50 may also be embodied as a fly-eye lens array.

The optical path changing unit 80 changes an optical path such that the effective light radiated from the light source 30 is directed toward the liquid crystal display device 70 and the effective light reflected from the liquid crystal display device 70 is directed to the projection lens unit 90.

The optical path changing unit 80 is preferably a polarizing beam splitter 81 that transmits or reflects light according to polarizing direction. The polarizing beam splitter 81 reflects one polarized light beam among unpolarized light beams incident from the light source 30, e.g., S-polarized light, to be directed toward the liquid crystal display device 70. On the other hand, the polarizing beam splitter 81 transmits other polarized light beam among light beams incident from the light source 30, e.g., P-polarizing light, which is phase shifted as the liquid crystal display device 70 is on/off, to allow the phase-shifted light to be directed toward the projection lens unit 90.

The reflecting type liquid crystal display device 70 is placed to face one plane of the polarizing beam splitter 81 and independently selects orientations of the liquid crystal for the respective pixels, thereby forming an image. The reflecting type liquid crystal display device 70 has a response time $\tau$ of not greater than 1 [msec]. The liquid crystal display device 70 is substantially the same as the reflecting type liquid crystal display device described above with reference to FIGS. 1, 2A and 2B, and a detailed explanation will not be given.

As described above, the one-panel type projector can be realized using a liquid crystal display device having a response time of not greater than 1 msec.

Therefore, the reflecting type liquid crystal display device having a vertically aligned structure according to the present invention can achieve a high contrast ratio and a quick response time of not greater than 1 msec by optimizing a cell gap and a refractive index anisotropy of liquid crystal.

Further, use of the liquid crystal display device allows for realization of a one-panel type projector, thereby achieving a miniaturized projector and low cost display.

**Claims**

1. A reflecting type liquid crystal display device comprising:

   a first substrate having a reflective electrode;
   a second substrate having a transparent electrode;
   first and second alignment layers provided on the second substrate to be opposed to and face each other;
   a spacer interposed between the first alignment layer and the second alignment layer to form a predetermined cell gap (d) therebetween; and
   vertically aligned liquid crystals injected in the cell gap, the cell gap (d) being not greater than 1.0 μm, the dielectric anisotropy ($\Delta\varepsilon$) of the liquid crystals being negative, and the refractive index anisotropy ($\Delta n$) of the liquid crystals being not less than 0.14.

2. The reflecting type liquid crystal display device of claim 1, wherein a pretilt angle ($\alpha$) of the first and second alignment layers satisfies the relationship of $80° \leq \alpha \leq 90°$.

3. The reflecting type liquid crystal display device of claim 1 or 2, wherein the spacer is made of silicon oxide ($SiO_2$).

4. The reflecting type liquid crystal display device as claimed in any one of claims 1 through 3, wherein the first and second alignment layers are a silicon oxide layer or a light alignment layer.

5. A projector comprising:

   a light source for producing light and illuminating the produced light to be directed in one direction;
   a color separation unit for separating colors from the light illuminated from the light source and causing light beams corresponding to the separated colors to sequentially travel;
   a reflecting type liquid crystal display device according to any preceding claim;
   an optical path changing unit disposed on an optical path between the light source and the reflecting type liquid crystal display device, for changing the optical path of the light incident from the light source to be directed toward a screen via the reflecting type liquid crystal display device; and
   a projection lens unit for projecting the image formed by the reflecting type liquid crystal display device toward the screen.

6. The projector of as claimed in claim 5, wherein the color separation unit comprises:

   a plurality of color filters for selectively passing through a beam having a predetermined wavelength among beams of white light incident from the light source, each of the plurality of color filters having a color rotating plate rotatably installed on an optical path in sequence; and
   a driver for rotating the color rotating plate.

7. The projector of as claimed in claim 5 or 6, wherein the optical path changing unit is a polarizing beam splitter for transmitting or reflecting the incident light according to the polarizing direction.

8. The projector of as claimed in claim 5, 6 or 7, further comprising a uniform light illuminating unit disposed on an optical path between the light source and the optical path changing unit such that the light illuminated from the light source is uniform.

# FIG. 1

# FIG. 2A

# FIG. 2B

FIG. 3

**European Patent Office**

## EUROPEAN SEARCH REPORT

Application Number

EP 04 25 6784

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/001285 A (SONY CORP ; ISOZAKI TADAAKI (JP); SUGIURA MINAKO (JP); HASHIMOTO SHUNI) 3 January 2003 (2003-01-03) * the whole document * | 1-4 | G02F1/139 H04N9/31 |
| Y | | 5-8 | |
| P,X | -& EP 1 400 837 A (SONY CORP) 24 March 2004 (2004-03-24) * paragraphs [0032], [0041], [0042], [0047], [0062] * * figure 11 * | 1-4 | |
| Y | US 2002/057402 A1 (UM KEE TAE) 16 May 2002 (2002-05-16) * paragraphs [0007], [0008] * * figure 1 * | 5-8 | |
| A | EP 1 098 536 A (TEXAS INSTRUMENTS INC) 9 May 2001 (2001-05-09) * paragraphs [0037], [0054] * * figures 8,16 * | 5-8 | |

TECHNICAL FIELDS
SEARCHED       (Int.Cl.7)

G02F
H04N

The present search report has been drawn up for all claims

| Place of search | Date of completion of the search | Examiner |
|---|---|---|
| Munich | 22 December 2004 | Hauser, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 04 25 6784

This annex lists the patent family members relating to the patent documents cited in  the above-mentioned European search report.
The members are as contained in the European Patent Office EDP file on
The European Patent Office is in no way liable for these particulars which are merely  given for the purpose of information.

22-12-2004

| Patent document cited in search report | | Publication date | Patent family member(s) | | Publication date |
|---|---|---|---|---|---|
| WO 03001285 | A | 03-01-2003 | CN | 1473280 T | 04-02-2004 |
| | | | EP | 1400837 A1 | 24-03-2004 |
| | | | WO | 03001285 A1 | 03-01-2003 |
| | | | JP | 2003107482 A | 09-04-2003 |
| | | | JP | 2004038202 A | 05-02-2004 |
| | | | JP | 2004102297 A | 02-04-2004 |
| | | | US | 2004105038 A1 | 03-06-2004 |
| | | | US | 2004196418 A1 | 07-10-2004 |
| EP 1400837 | A | 24-03-2004 | EP | 1400837 A1 | 24-03-2004 |
| | | | US | 2004105038 A1 | 03-06-2004 |
| | | | CN | 1473280 T | 04-02-2004 |
| | | | WO | 03001285 A1 | 03-01-2003 |
| | | | JP | 2003107482 A | 09-04-2003 |
| | | | JP | 2004038202 A | 05-02-2004 |
| | | | JP | 2004102297 A | 02-04-2004 |
| | | | US | 2004196418 A1 | 07-10-2004 |
| US 2002057402 | A1 | 16-05-2002 | KR | 2002037797 A | 23-05-2002 |
| EP 1098536 | A | 09-05-2001 | EP | 1098536 A2 | 09-05-2001 |
| | | | JP | 2001242416 A | 07-09-2001 |
| | | | TW | 508953 B | 01-11-2002 |
| | | | US | 6771325 B1 | 03-08-2004 |

EPO FORM P0459

For more details about this annex : see Official Journal of the European Patent Office, No. 12/82